Europäisches Patentamt

European Patent Office

Office européen des brevets

(19)

(11) Veröffentlichungsnummer : **0 174 465**
**B1**

(12) EUROPÄISCHE PATENTSCHRIFT

(45) Veröffentlichungstag der Patentschrift :
07.09.88

(51) Int. Cl.⁴ : **G 01 G 19/02**

(21) Anmeldenummer : 85108764.3

(22) Anmeldetag : 12.07.85

(54) Spaltabdichtung für Brückenwaagen.

(30) Priorität : 03.09.84 DE 3432344

(43) Veröffentlichungstag der Anmeldung :
19.03.86 Patentblatt 86/12

(45) Bekanntmachung des Hinweises auf die Patenterteilung : 07.09.88 Patentblatt 88/36

(84) Benannte Vertragsstaaten :
AT BE CH DE FR IT LI LU NL

(56) Entgegenhaltungen :
EP-A- 0 035 579
EP-A- 0 051 776
DE-A- 2 531 268

(73) Patentinhaber : CARL SCHENCK AG
Landwehrstrasse 55 Postfach 40 18
D-6100 Darmstadt (DE)

(72) Erfinder : Feith, Johann
Spitzwegstrasse 11
D-6074 Rödermark (DE)

(74) Vertreter : Brand, Fritz, Dipl.-Ing.
Carl Schenck AG Patentabteilung Landwehrstrasse
55 Postfach 4018
D-6100 Darmstadt (DE)

## Beschreibung

Die Erfindung betrifft eine Spaltabdichtung für Brückenwaagen zum Abdichten des zwischen dem Fundament und der Waagenbrücke vorhandenen Spaltes, mit Abdichtelementen, die zwischen dem Fundament und der Waagenbrücke angeordnet sind.

Bei Brückenwaagen ist es bekannt, T-förmige Elemente (T-Profile, T-Stücke) aus Metall oder Kunststoff in den Spalt zwischen dem Fundament und der Waagenbrücke einzulegen, um das Eindringen von Schmutz zu verhindern. Der Steg der T-Stücke ragt dabei in den Spalt hinein, während der Fuß auf dem Fundamentrahmen und der Brückenumrandung bzw. der Brücke aufliegt.

Weiterhin ist es bekannt, den Brückenspalt durch flache elastische Elemente, z. B. Flachgummistreifen oder -bänder, abzudecken. Die Gummistreifen werden am Fundament und zwar bündig mit der Fundamentoberkante angebracht und liegen lose auf der Umrandung der Waagenbrücke auf. Bei Belastung kann sich die Waagenbrücke ungehindert nach unten bewegen, wobei allerdings ein Spalt zwischen den Gummistreifen und der Waagenbrücke entstehen kann.

Bei einer anderen bekannten Anordnung werden Abdichtelemente verwendet, die an beiden Seiten mehrere, seitlich abstehende und übereinander angeordnete Stegreihen aufweisen. Die Abdichtelemente werden in den Spalt zwischen Waagenbrücke und Fundament gedrückt, wobei sich die Stegreihen elastisch an die Seitenwände der Fundamentgrube und der Waagenbrücke anlegen. Bei Bewegungen der Waagenbrücke können die Stege bzw. die Abdichtelemente der Brückenbewegung folgen.

Die bekannten Anordnungen zur Spaltabdeckung bzw. Spaltabdichtung befriedigen jedoch in der Praxis nicht voll. Zum einen können immer noch Schmutz, Geröll, Schlamm sowie Wasser oder andere Flüssigkeiten in den Spalt eindringen. Zum anderen können, insbesondere bei Verschmutzung, teilweise nicht unerhebliche Kraftnebenschlüsse auftreten, die das Wägeergebnis unzulässig beeinflussen.

Es ist Aufgabe der vorliegenden Erfindung, die Nachteile des Standes der Technik zu vermeiden und eine verbesserte Spaltabdichtung für Brückenwaagen zu schaffen. Durch eine solche Abdichtung soll das Eindringen von Schmutz und Wasser in den Brückenspalt ganz oder weitgehend vermieden werden, wobei die Meßgenauigkeit der Waage möglichst wenig beeinträchtigt werden soll. Diese Aufgabe wird durch die im Anspruch angegebenen Merkmale gelöst. Die abhängigen Ansprüche betreffen Ausgestaltungen der Erfindung.

Die Verwendung von flexiblen, länglichen Balgelementen zur Spaltabdichtung hat den Vorteil, daß praktisch eine hermetische Abdichtung der Waagengrube herstellbar ist. Damit wird das Eindringen von Schmutz verhindert, es gibt kein Verschlammen der Grube mehr und das Reinigen der Grube kann weitgehend entfallen. Gegebenenfalls kann sogar auf eine Entwässerung der Grube verzichtet werden. Da die Balgelemente bei Bewegungen der Waagenbrücke im Brückenspalt « abrollen », entsteht nur wenig Reibung und damit ein vernachlässigbar kleiner Kraftnebenschluß. Die Genauigkeit der Waage bleibt daher bei Verwendung der vorgeschlagenen Abdichtanordnung erhalten.

Die Erfindung wird nachstehend an Ausführungsbeispielen in den Zeichnungen dargestellt und in der Beschreibung näher erläutert.

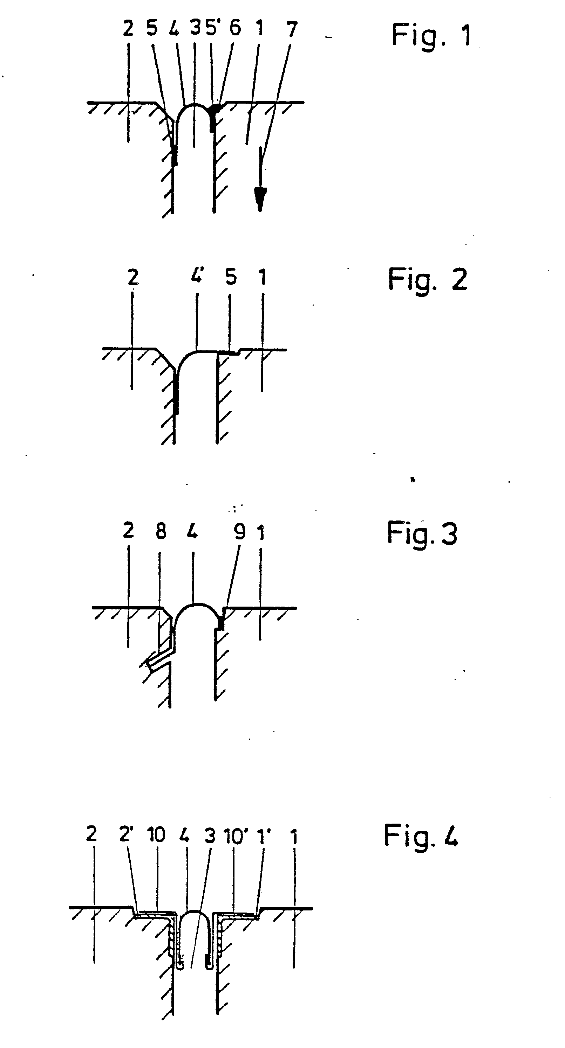

Die Zeichnungen zeigen im Ausschnitt senkrechte Schnitte durch eine Waagenbrücke und das angrenzende Waagenfundament an einer Waagenlängsseite. In den Figuren 1-7 sind einige unterschiedliche Anordnungsmöglichkeiten der erfindungsgemäßen Spaltabdichtung schematisch und ohne Anspruch auf Vollständigkeit dargestellt. Es ist ohne weiteres erkennbar, daß eine ganze Reihe weiterer konstruktiver Abwandlungen oder Kombinationen möglich sind.

In den Figuren ist eine Waagenbrücke 1 von einer Fundamentgrube bzw. einem seitlich der Waagenbrücke angeordneten Fundamentteil bzw. Fundament 2 durch einen Brückenspalt 3 getrennt. Der Brückenspalt ist bei üblichen Brückenwaagen etwa 10-25 mm breit.

Zur Abdichtung des Brückenspaltes 3 ist in Figur 1 ein längliches — « länglich » senkrecht zur Zeichenebene gesehen — Balgelement 4 vorgesehen, das als Rollbalg oder rollbalgähnliches Element ausgebildet sein kann. Es ist an einer Klebestelle 5 mit dem Fundament 2 und an einer Klebestelle 5' mit der Waagenbrücke 1 jeweils fest verbunden. Die Klebestelle 5' ist oberhalb der Klebestelle 5 angeordnet, um einen großen Abrollweg zu ermöglichen und die Montage zu erleichtern. Die Kanten der Waagenbrücke 1 und des Fundaments 2 können, wie in Figur 1 dargestellt, mehr oder weniger stark abgeschrägt oder abgerundet sein. An der Klebestelle 5' kann die Vertiefung zwischen Waagenbrücke 1 und dem Balgelement 4 mit Silikonkautschuk 6 oder einem anderen dauerelastischem oder dauerplastischem Material ausgefüllt werden.

In allen Figuren ist die Waagenbrücke 1 gegenüber dem Fundament 2 in Ruhestellung dargestellt. Hierbei liegt die Oberkante der Waagenbrücke 1 im allgemeinen bündig, d. h. auf gleicher Höhe, mit der Oberkante des Waagenfundaments 2. Bei Belastung der Waage kann sich die Waagenbrücke 1 wie durch Pfeil 7 (Figur 1) dargestellt nach unten bewegen. Der Weg der Waagenbrücke kann dabei bis zu etwa 15 mm betragen. Das an der Waagenbrücke 1 befestigte Balgelement 4 muß die Bewegung der Waagenbrücke mitmachen können, was durch das « Abrollen » des Elements im Brückenspalt 3 möglich ist.

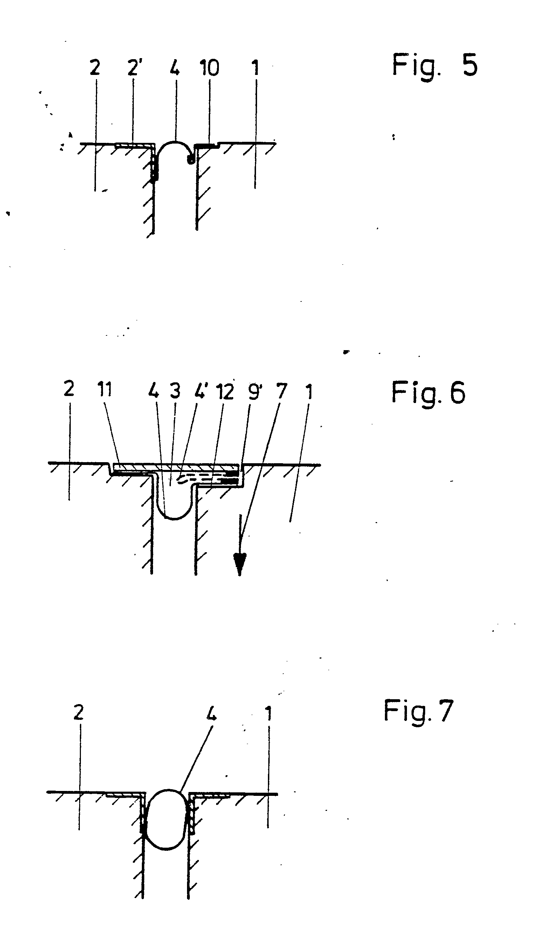

Das Balgelement 4 ist länglich ausgebildet und durchgehend an den Längs- und Stirnseiten der Waagenbrücke 1 angeordnet sowie an der Waagenbrücke und/oder dem Fundament befestigt. Die Befestigung kann hierbei fest, z. B. durch Verkleben, oder lösbar, z. B. durch Verklemmen oder Verschrauben (gegebenenfalls über Zwischenelemente), vorgenommen werden. Es ist auch möglich, das Balgelement 4 nur an der Waagenbrücke 1 oder am Fundament 2 zu befestigen und es an dem jeweils gegenüberliegenden Bauteil nur anliegen zu lassen (s. a. Figur 7). Hierzu ist lediglich eine gewisse Eigenelastizität des Balgmaterials erforderlich. An den Ecken der Waage kann das Balgelement 4 auf Gehrung geschnitten und verklebt werden. Eine Verklebung ist auch an eventuell erforderlich werdenden anderen Stoßstellen möglich.

Als Material für das Balgelement können Gummi, Gummi mit Gewebeeinlagen, beschichtete Gewebe, Kunststoffolie, Silikonkautschuk oder andere geeignete Materialien verwendet werden. Die Materialstärke kann hierbei je nach Einsatzzweck zwischen 0,3 und 3 mm liegen. Die größeren Materialstärken können z. B. bei rauhem Betrieb verwendet werden. Das für die Abdichtung des Brückenspaltes verwendete Material muß flexibel sein, damit die Bewegung der Waagenbrücke nicht behindert wird und keine Kraftnebenschlüsse entstehen. Das Balgmaterial kann auch elastisch sein.

Bei der Anordnung nach Figur 2 ist ein Rollbalgelement 4' in gleicher Weise wie bei Figur 1 mit dem Fundament 2 verbunden, z. B. verklebt. Mit der Waagenbrücke 1 ist das Element 4' jedoch, wie dargestellt, an der Brückenoberseite d. h. in waagrechter Richtung auf der Brücke bzw. Brückenkante aufliegend verklebt. Dadurch ergibt sich eine einfache Montage des Balgelements 4'.

In Figur 3 ist der Balg 4 in einer Ausnehmung 8 des Fundaments 2 eingesetzt. Die Ausnehmung kann in nicht dargestellter Weise auch durch ein besonderes Aufnahmeelement gebildet werden, das am Fundament 2 befestigt wird. An der Waagenbrücke 1 ist der Rollbalg 4 in einer spaltseitigen Ausnehmung 9 verklebt. Anstelle der Verklebung kann auch eine lösbare Verbindung, z. B. über ein Zwischenelement, vorgesehen werden.

Im Ausführungsbeispiel nach Figur 4 sind die Waagenbrücke 1 und das Fundament 2 mit Winkelrahmen oder Winkeleinfassungen 1', 2' versehen. An den Winkelrahmen 1', 2' sind winkelförmige Aufnahmeelemente 10, 10' angeordnet. An den in den Brückenspalt 3 hineinragenden Schenkeln der Aufnahmeelemente 10, 10' sind die Längsseiten des Rollbalgs 4 z. B. durch Verklemmen befestigt.

In Figur 5 ist eine Spaltabdichtung dargestellt, bei der das Balgelement 4 an der Winkeleinfassung 2' des Fundaments 2 verklebt ist, während es an der Waagenbrücke 1 in einem Aufnahmeelement 10 ähnlich wie bei Figur 4 dargestellt angeordnet ist. Die Anordnungen nach den Figuren 4 und 5 eignen sich besonders für den nachträglichen Einbau der Spaltabdichtung.

Figur 6 zeigt eine Spaltabdichtung mit einem zusätzlichen, oberhalb der Abdichtung angeordneten Abdeckelement. Am Fundament 2 ist ein elastisches oder flexibles Abdeckelement 11 so angebracht, daß es bündig mit der Fundamentoberkante abschließt und in eine Ausnehmung 9' der Waagenbrücke 1 hineinragt oder in dieser Ausnehmung aufliegt. Das einen Rollbalg bildende Balgelement 4 ist mit einer Längsseite unter dem Abdeckelement 11 am Fundament 2 und mit der anderen Längsseite an der Waagenbrücke 1 in geeigneter Weise befestigt. Die Wölbung des Balgelements 4 ist im Gegensatz zu den Anordnungen nach den Figuren 1-5, bei denen die Balgwölbung nach oben bzw. außen zeigt, nach unten in den Brückenspalt 3 hineingerichtet. An der Abrollbewegung des Balgelements 4 ändert sich jedoch dadurch bei Bewegungen der Waagenbrücke 1 entsprechend Pfeil 7 nichts.

Die Anordnung des Balgelements 4 mit der Wölbung nach unten kann generell auch ohne Abdeckelement 11 verwendet werden. Das Balgelement kann hierbei z. B. an abgeschrägten Kanten des Fundaments und der Waagenbrücke verklebt oder bei geraden Kanten in geeigneter Weise verklemmt werden.

Anstelle des Balgelements 4 kann bei der dargestellten Anordnung auch ein gestrichelt angedeutetes, balgähnliches Element 4' vorgesehen werden, das an einer Längsseite am beweglichen Ende des Abdeckelements 11 und mit der anderen Längsseite an der Waagenbrücke 1 oder an einem beispielsweise elastischen Zwischenelement 12 fest oder lösbar verbunden ist. Das Element 4' ist also zwischen dem Abdeckelement 11 und der Waagenbrücke 1 bzw. dem Zwischenelement 12 waagrecht angeordnet und ragt mit seinem mittleren Teil in den Brückenspalt 3 hinein. Bei Bewegungen der Brücke entsprechend Pfeil 7 ergibt sich ebenfalls eine abrollartige Bewegung des Elements 4', wobei praktisch keine Kraftwirkung entsteht und damit Kraftnebenschlüsse vermieden werden.

Ein Ausführungsbeispiel mit einem schlauchförmigen Balgelement ist in Figur 7 dargestellt. Das Balgelement 4 ist als Schlauch ausgebildet und stellt bei geeigneter Befestigung eine Art Doppelbalg dar, da die obere und die untere Schlauchhälfte allein jeweils als Balgelemente im Sinne der vorliegenden Erfindung anzusehen sind. Das schlauchförmige Balgelement 4 ist am Fundament 2 bzw. der Winkelrahmeneinfassung, wie dargestellt, durch Verkleben befestigt. An der Waagenbrücke 1 liegt das Balgelement lediglich an, ohne besonders befestigt zu sein. Bei Vertikalbewegungen der Waagenbrücke 1 wird es durch Reibung mitgenommen, wobei die Dichtwirkung praktisch nicht beeinträchtigt wird. Das Balgelement kann auch mit der Waagenbrücke fest verbunden werden (ähnlich wie bei Figur 1 dargestellt). Für die Befestigung des Elements können auch zusätzliche Aufnahmeelemente, ähnlich wie bei Figur 4 und 5 beschrieben, verwendet werden.

Bei allen beschriebenen Anordnungen ergibt sich praktisch ein hermetischer Abschluß der Waagengrube. Eine eventuell erforderliche Entlüftung der Grube kann z. B. über einen Entwässerungskanal, Entlüftungsrohre oder dgl. vorgenommen werden.

**Patentansprüche**

1. Spaltabdichtung für Brückenwaagen zum Abdichten des zwischen dem Fundament und der Waagenbrücke vorhandenen Spaltes, mit Abdichtelementen, die zwischen Fundament und Waagenbrücke angeordnet sind, dadurch gekennzeichnet, daß die Abdichtelemente als flexible, längliche Balgelemente (4, 4') ausgebildet sind, deren Längsseiten mit dem Fundament (2) und/oder der Waagenbrücke (1) direkt oder über Zwischenelemente (10, 10', 11, 12) verbunden sind und daß die Balgelemente (4, 4') so ausgebildet und angeordnet sind, daß bei vertikalen Bewegungen der Waagenbrücke (1) eine abrollartige Bewegung in ihnen entsteht.

2. Spaltabdichtung nach Anspruch 1, dadurch gekennzeichnet, daß die Balgelemente (4, 4') schlauchförmig ausgebildet sind.

3. Spaltabdichtung nach Anspruch 1 oder 2, dadurch gekennzeichnet, daß die Balgelemente (4, 4') unmittelbar unterhalb der Fundament- bzw. Brückenoberkante im Brückenspalt (3) angeordnet sind.

4. Spaltabdichtung nach einem der vorhergehenden Ansprüche, dadurch gekennzeichnet, daß die Balgelemente (4, 4') mit dem Fundament (2) und/oder der Waagenbrücke (1) lösbar verbunden sind.

5. Spaltabdichtung nach einem der vorhergehenden Ansprüche, dadurch gekennzeichnet, daß die Balgelemente (4, 4') mit dem Fundament (2) und/oder der Waagenbrücke (1) verklebt sind.

6. Spaltabdichtung nach einem der vorhergehenden Ansprüche, dadurch gekennzeichnet, daß mindestens eine Längsseite der Balgelemente (4, 4') in Aufnahmeelemente (10, 10') eingesetzt ist, die mit dem Fundament (2) oder der Waagenbrücke (1) verbindbar sind.

7. Spaltabdichtung nach einem der vorhergehenden Ansprüche, dadurch gekennzeichnet, daß die Längsseiten der Balgelemente (4, 4') in Ausnehmungen (8, 9, 9') am Fundament (2) und/oder der Waagenbrücke (1) einsetzbar sind.

8. Spaltabdichtung nach einem der vorhergehenden Ansprüche, dadurch gekennzeichnet, daß über den Balgelementen (4, 4') ein zusätzliches elastisches oder flexibles, mit dem Fundament (2) verbundenes Abdeckelement (11) angeordnet ist.

9. Spaltabdichtung nach Anspruch 8, dadurch gekennzeichnet, daß die Balgelemente (4, 4') mit dem beweglichen Ende des zusätzlichen Abdeckelements (11) und der Waagenbrücke (1) verbunden sind.

10. Spaltabdichtung nach einem der vorhergehenden Ansprüche, dadurch gekennzeichnet, daß die Balgelemente (4, 4') aus Gummi, Gummi mit Gewebeeinlage(n), beschichtetem Gewebe, Kunststoffolie oder Silikonkautschuk bestehen und eine Dicke von etwa 0,3-3 mm aufweisen.

**Claims**

1. Tight cleft covering for weighbridges for sealing the cleft between the base and the weighbridge, with sealing elements, which are positioned between the base and the weighbridge, characterised in that the sealing elements are constructed as flexible, oblong bellows elements (4, 4'), the longitudinal sides of which are connected directly or by intermediate elements (10, 10', 11, 12) to the base (2) and/or the weighbridge (1) and that the bellows elements (4, 4') are so constructed and positioned that a roll-type motion is produced in them with vertical movements of the weighbridge (1).

2. Tight cleft covering according to Claim 1, characterised in that the bellows elements (4, 4') are of tubular construction.

3. Tight cleft covering according to Claim 1 or 2, characterised in that the bellows elements (4, 4') are positioned directly underneath the upper edge of the base or bridge in the bridge cleft (3).

4. Tight cleft covering according to one of the previous Claims, characterised in that the bellows elements (4, 4') are connected to the base (2) and/or the weighbridge (1) so as to be separable.

5. Tight cleft covering according to one of the previous Claims, characterised in that the bellows elements (4, 4') are glued to the base (2) and/or the weighbridge (1).

6. Tight cleft covering according to one of the previous Claims, characterised in that at least one longitudinal side of the bellows elements (4, 4') is inserted in receiving elements (10, 10') which may be connected to the base (2) or the weighbridge (1).

7. Tight cleft covering according to one of the previous Claims, characterised in that the longitudinal sides of the bellows elements (4, 4') may be inserted into recesses (8, 9, 9') on the base (2) and/or the weighbridge (1).

8. Tight cleft covering according to one of the previous Claims, characterised in that an additional elastic or flexible covering element (11) connected to the base (2) is positioned over the bellows elements (4, 4').

9. Tight cleft covering according to Claim 8, characterised in that the bellows elements (4, 4') are connected to the movable end of the additional covering element (11) and of the weighbridge (1).

10. Tight cleft covering according to one of the previous Claims, characterised in that the bellows elements (4, 4') consist of rubber, rubber with fabric insert(s), coated fabric, plastic film or silicon rubber and have a thickness of approximately 0.3-3 mm.

**Revendications**

1. Joint d'interstice pour rendre étanche l'interstice existant entre la fondation et le pont-bascule, comportant des éléments d'étanchéité qui sont disposés entre la fondation et le pont-bascule, caractérisé en ce que les éléments d'étanchéité sont réalisés sous forme d'éléments de soufflet allongés souples (4, 4') dont les côtés longitudinaux sont reliés avec la fondation (2) et/ou avec le pont-bascule (1) directement par l'intermédiaire d'éléments intercalaires (10, 10', 11, 12), et en ce que les éléments de soufflet (4, 4') sont réalisés et disposés de telle sorte que, lors des mouvements verticaux du pont-bascule (1), il se produit en eux un mouvement de roulement.

2. Joint d'interstice selon la revendication 1, caractérisé en ce que les éléments de soufflet (4, 4') sont réalisés en forme de tuyau souple.

3. Joint d'interstice selon la revendication 1 ou 2, caractérisé en ce que les éléments de soufflet (4, 4') sont disposés immédiatement en dessous de l'arête supérieure de la fondation ou du pont dans l'interstice du pont (3).

4. Joint d'interstice selon l'une des revendications précédentes, caractérisé en ce que les éléments de soufflet (4, 4') sont reliés de façon amovible avec la fondation (2) et/ou le pont-bascule (1).

5. Joint d'interstice selon l'une des revendications précédentes, caractérisé en ce que les éléments de soufflet (4, 4') sont collés sur la fondation (2) et/ou le pont-bascule (1).

6. Joint d'interstice selon l'une des revendications précédentes, caractérisé en ce qu'au moins un côté longitudinal des éléments de soufflet (4, 4') est placé dans des éléments de réception (10, 10'), qui peuvent être reliés à la fondation (2) ou au pont-bascule (1).

7. Joint d'interstice selon l'une des revendications précédentes, caractérisé en ce que les côtés longitudinaux des éléments de soufflet (4, 4') peuvent être introduits dans des évidements (8, 9, 9') sur la fondation (2) et/ou sur le pont-bascule (1).

8. Joint d'interstice selon l'une des revendications précédentes, caractérisé en ce qu'un élément de recouvrement (11) supplémentaire, élastique ou flexible, relié à la fondation (2) est placé sur les éléments de soufflet (4, 4').

9. Joint d'interstice selon la revendication 8, caractérisé en ce que les éléments de soufflet (4, 4') sont reliés avec l'extrémité mobile de l'élément de recouvrement supplémentaire (11) et avec le pont-bascule (1).

10. Joint d'interstice selon l'une des revendications précédentes, caractérisé en ce que les éléments de soufflet (4, 4') sont constitués de caoutchouc, de caoutchouc avec une garniture (ou des garnitures) de tissu, de tissus revêtus d'une feuille de matière plastique ou de caoutchouc au silicone et ont une épaisseur d'environ 0,3 à 3 mm.

Fig. 1

Fig. 2

Fig. 3

Fig. 4

Fig. 5

Fig. 6

Fig. 7